Europäisches Patentamt

European Patent Office

Office européen des brevets

(11) Veröffentlichungsnummer: **0 450 482 A2**

# (12) EUROPÄISCHE PATENTANMELDUNG

(21) Anmeldenummer: 91104849.4

(22) Anmeldetag: 27.03.91

(51) Int. Cl.5: **B29C 51/42**, B29C 51/26, B29B 13/02, B29C 31/00

(30) Priorität: 31.03.90 DE 4010441

(43) Veröffentlichungstag der Anmeldung: 09.10.91 Patentblatt 91/41

(84) Benannte Vertragsstaaten: AT BE CH DE DK ES FR GB GR IT LI LU NL SE

(71) Anmelder: R + S STANZTECHNIK GmbH Carl-Legien-Strasse 16

W-6050 Offenbach am Main(DE)

(72) Erfinder: **Spengler, Ernst Maximilian** Hasenpfad 10 W-6056 Heusenstamm(DE)

(74) Vertreter: **Schieferdecker, Lutz, Dipl.-Ing.** Herrnstrasse 37 W-6050 Offenbach am Main(DE)

(54) Vorrichtung mit einer Heizstation und einer Formstation.

(57) Die Erfindung betrifft eine Vorrichtung mit einer Heizstation und einer Formstation zum Herstellen eines Formteiles aus einem flächigen, dreidimensional verformbaren Werkstück, das aus thermoplastischem Kunststoff besteht oder derartigen Kunststoff enthält.

Der Kern der Erfindung besteht darin,
a) daß in der Heizstation mindestens eine Heizeinrichtung angeordnet ist und
b) daß mindestens eine Heizeinrichtung zugleich als Träger und Transporteinrichtung für das Werkstück in die Formstation bewegbar ist.

Fig. 1

Die Erfindung betrifft eine Vorrichtung mit einer Heizstation und einer Formstation zum Herstellen eines Formteiles aus einem flächigen, dreidimensional verformbaren Werkstück, das aus thermoplastischem Kunststoff besteht oder derartigen Kunststoff enthält.

Vorrichtungen der genannten Art zum Herstellen dünnwandiger Formteile aus thermoplastischen Kunststoffen wie z.B. von Kraftfahrzeug-Innenverkleidungsteilen und dgl. sind in großer Zahl bekannt und arbeiten in mehr oder weniger zufriedenstellender Weise. Nachteilig ist in den meisten Fällen, daß zuviel Abfall anfällt, daß mit zu hohen Temperaturen gearbeitet wird, wodurch giftige Dämpfe entstehen, daß der Energieaufwand relativ groß ist und daß die Vorrichtungen für bestimmte Formteile speziell ausgelegt werden müssen und sich nur schwer umrüsten lassen usw.

Der Erfindung liegt daher die Aufgabe zugrunde, eine Vorrichtung zum Herstellen von dünnwandigen Formteilen zu schaffen, die aus thermoplastischen Kunststoffen bestehen oder zumindest thermoplastische Kunststoffe enthalten, wobei diese Vorrichtung gegenüber bekannten Vorrichtungen der genannten Art Verbesserungen hinsichtlich der oben genannten Nachteile aufweist.

Zur Lösung dieser Aufgabe sieht die Erfindung vor, daß in der Heizstation mindestens eine Heizeinrichtung angeordnet ist und daß mindestens eine Heizeinrichtung zugleich als Träger für das Werkstück in die Formstation bewegbar ist.

Die Verwendung einer Heizeinrichtung, die aus der Heizstation in die Formstation bewegbar bzw. verfahrbar ist, erlaubt es, das Werkstück in geringstmöglicher Weise zu erwärmen, da es während des Transportes zur Formstation nicht mehr abkühlt, sondern auf seiner optimalen Temperatur gehalten wird. Während das dünne und meist großflächige Werkstück bisher beim Überführen aus der Heizstation in die Formstation in erheblichem Umfang Wärme verlor, ist dies bei Verwendung einer aus der Heizstation bis in die Formstation verfahrbaren Heizeinrichtung nicht mehr der Fall. Damit verbunden sind im Ergebnis niederigere Temperaturen, auf die das Werkstück aufgeheizt werden muß, ferner ein geringerer Energieaufwand und schließlich auch eine geringere Freisetzung von schädlichen Dämpfen und Gasen, die aus dem erwärmten, thermoplastische Kunststoffe enthaltenden Werkstück austreten.

Vorzugsweise befinden sich in der Heizstation eine untere Heizeinrichtung und eine obere Heizeinrichtung, zwischen denen das flächige Werkstück zum Erwärmen angeordnet wird.

In Weiterbildung der Erfindung dient die obere Heizeinrichtung zugleich als verfahrbarer Träger für das zu verformende Werkstück, insbesondere wenn in der Formstation eine Unterform angeordnet ist, auf die das flächige Werkstück abgelegt werden kann.

Grundsätzlich ist es aber auch möglich, alle mit dem Transport und dem Verformen des Werkstückes zusammenhängenden Teile derart vorzusehen, daß die untere Heizeinrichtung als Träger dient, wenn dann eine Oberform in der Formstation vorgesehen ist, welche z.B. mit Hilfe von Greifern oder mit Hilfe von Saugluft das erwärmte Werkstück übernimmt.

Besonders zweckmäßig ist es schließlich, wenn mindestens eine der beiden Heizeinrichtungen mit wenigstens zwei Medien, nämlich mit elektrischem Strom zum Heizen und mit heißer Luft zum Erwärmen eines offenporigen bzw. luftdurchlässigen Werkstückes arbeitet. Eine derartige Heizeinrichtung ist nämlich in der Lage, sowohl homogene Werkstücke als auch luftdurchlässige Werkstücke zu erwärmen, wobei ferner zweckmäßig ist, wenn wenigstens eine der beiden Heizeinrichtungen zusätzlich eine Kühleinrichtung z.B. in Gestalt von Wasserkanälen aufweist. Bei der zusätzlichen Anordnung derartiger Kühleinrichtungen ist es nämlich möglich, beide Heizeinrichtungen innerhalb enger Toleranzen auf exakte Temperaturen einzustellen und auch den gewünschten Wärmeübergang auf das zu erwärmende Werkstück genau zu regeln. Hieraus ergibt sich dann schließlich noch der Vorteil, daß auch beide Heizeinrichtungen mit unterschiedlichen Temperaturen arbeiten, so daß es möglich ist, mehrlagige Werkstücke auf ihren beiden Aussenseiten unterschiedlichen Temperaturen auszusetzen. Insbesondere wenn verschiedene Lagen des dünnwandigen Werkstückes aus verschiedenen Werkstoffen bestehen, wie z.B. einerseits aus einem homogenen, thermoplastischen Kunststoff mit einer Schmelztemperatur von X-Grad Celcius und andererseits aus einem offenzelligen, thermoplastischen Kunststoff mit einer Schmelztemperatur von Y-Grad Celcius, so ist ist es bei Verwendung der erfindungsgemäßen Heizeinrichtungen möglich, ein derartiges Werkstück auf seinen beiden Seiten unterschiedlichen Temperaturen und verschiedenartigen Wärmeeinwirkungen auszusetzen.

Erfindungsgemäß sind schließlich auch gegebenenfalls einsetzbare Greifer vorgesehen, welche das erwärmte Werkstück in der Formstation mit Nadeln erfassen und zumindest vor dem Formgebungsvorgang halten. Diese Nadelgreifer benötigen randseitig an jedem Werkstück größenordnungsmäßig höchstens 30 bis 40 mm Material, um das jeweilige Werkstück fassen zu können. Dies bedeutet, daß mit bereits engtolerierten Zuschnitten gearbeitet werden kann und somit der entstehende Abfall ausserordentlich gering ist.

Ferner ist ein Arbeiten mit engtolerierten Zuschnitten dann möglich, wenn der Zuschnitt in der Heizstation exakt und lagegenau abgelegt wird. Auch ist es zweckmäßig, wenn der Zuschnitt von randseitig angeordneten Rahmen gehalten wird und in der Formstation eine Vakuumverformung erfolgt.

Weitere Merkmale der Erfindung gehen aus Unteransprüchen im Zusammenhang mit der Beschreibung und der Zeichnung hervor.

Die Erfindung wird nachstehend anhand von Ausführungsbeispielen, die in der Zeichnung dargestellt sind, näher beschrieben. Dabei zeigen:

Fig. 1. eine Prinzipskizze der aus Heizstation und Formstation bestehenden Vorrichtung mit geöffneter Heizstation;

Fig. 2: eine Prinzipskizze wie in Fig. 1, jedoch mit geschlossener Heizstation;

Fig. 3: eine Prinzipskizze wie in den Fig. 1 und 2 mit einer aus der Heizstation in die Formstation verfahrenen Heizeinrichtung;

Fig. 4 - 6: Prinzipskizzen mit weiteren Stadien der Arbeitsweise der Vorrichtung;

Fig. 7: eine Prinzipskizze einer Vorrichtung mit einer abgewandelten Formstation;

Fig. 8: im Schnitt sowie größerem Maßstab eine Prinzipskizze von wesentlichen Teilen einer Heizeinrichtung;

Fig. 9: in Draufsicht sowie in anderem Maßstab eine Prinzipskizze eines Rahmens für die verfahrbare Heizeinrichtung;

Fig. 10: eine Prinzipskizze einer Greifeinrichtung in anderem Maßstab ;

Fig. 11: eine Seitenansicht der Greifeinrichtung gemäß Fig. 10;

Fig. 12: eine abgewandelte Greifeinrichtung in einer ersten Arbeitsstellung und

Fig. 13: die Greifeinrichtung gemäß Fig. 12 in einer zweiten Arbeitsstellung.

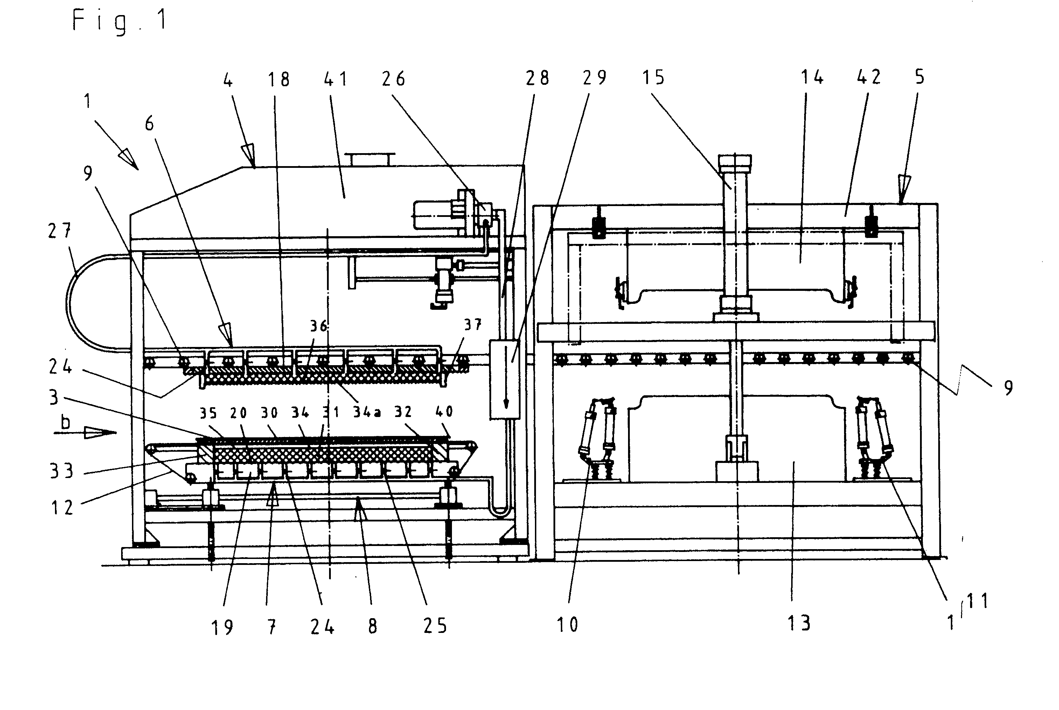

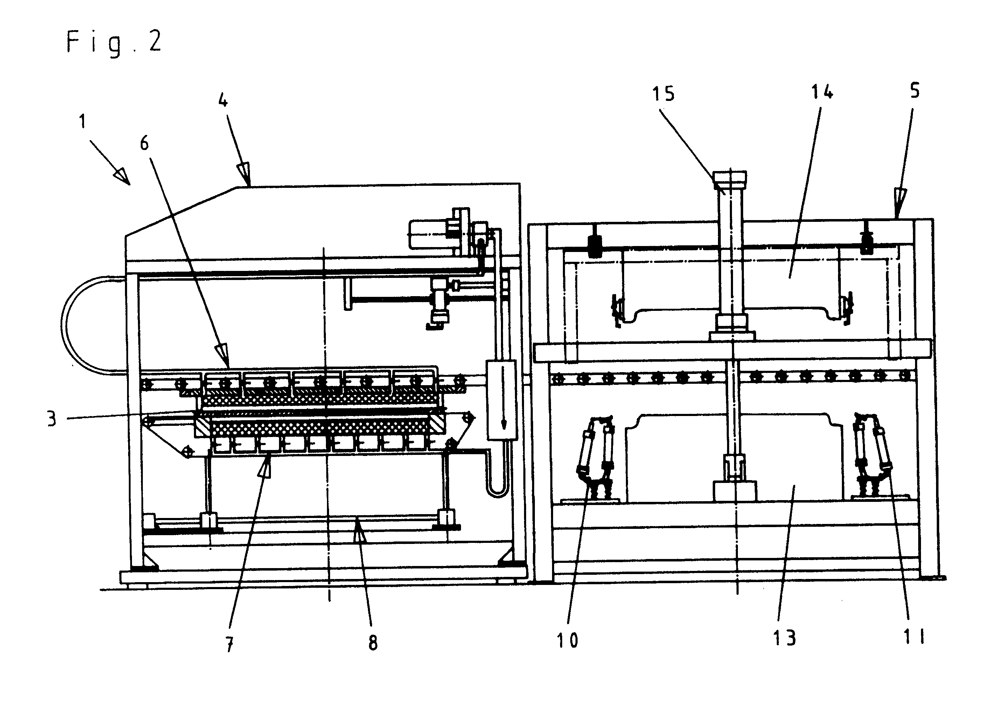

Eine Vorrichtung 1 zum Herstellen eines Formteiles 2 aus einem flächigen, dreidimensional verformbaren, einlagigen oder mehrlagigen Werkstück 3, das aus thermoplastischem Kunststoff besteht oder diesen enthält, umfaßt gemäß Fig. 1 eine Heizstation 4 und eine Formstation 5. In der Heizstation 4 befindet sich mindestens eine Heizeinrichtung 6 bzw. es sind dort gemäß dem in den Figuren dargestellten Ausführungsbeispiel zwei zusammenwirkende und zwischen sich das Werkstück 3 erwärmende Heizeinrichtungen 6 und 7 angeordnet. Die untere Heizeinrichtung 7 ist mit Hilfe einer Hubeinrichtung 8 z.B. in Gestalt eines Spindelantriebes aus einer unteren Position gemäß Fig. 1 in eine obere Position gemäß Fig. 2 anhebbar, so daß das auf der unteren Heizeinrichtung 7 ruhende oder dort abgelegte Werkstück 3 möglichst nahe an die obere Heizeinrichtung 6 herangefahren werden kann oder in unmittelbaren Kontakt mit der oberen Heizeinrichtung 6 gelangt.

Die obere Heizeinrichtung 6 dient nicht nur zum Aufheizen von Werkstücken 3, sondern sie ist auch aus der Heizstation 4 in die Formstation 5 bewegbar bzw. auf Rollen 9 dorthin verfahrbar und dient somit zugleich als Träger und Transporteinrichtung zum Transportieren des erwärmten Werkstückes 3 aus der Heizstation 4 in die Formstation 5. Hierzu weist die Heizeinrichtung 6 ferner geeignete Haltemittel für das gemäß Ausführungsbeispiel unter ihr hängende Werkstück 3 auf. Diese Haltemittel können z.B. mit Saugluft arbeiten.

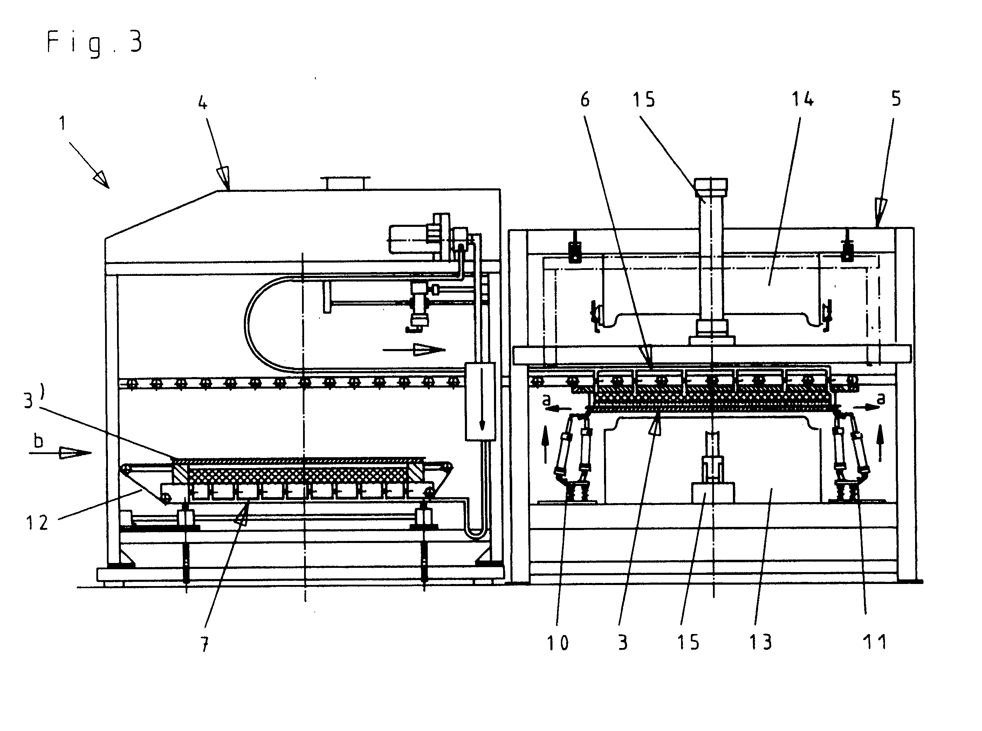

Sobald die Heizeinrichtng 6 das Werkstück 3 aus der Heizstation 4 in die Formstation 5 gemäß Fig. 3 transportiert hat, wird das Werkstück 3 dort von einer bzw. von mehreren Greifeinrichtungen 10, 11 übernommen und in gespanntem Zustand gehalten. Dies ist mit Hilfe von Pfeilen a in Fig. 3 angedeutet, welche die Zugrichtung der Greifeinrichtungen 10, 11 zeigen.

Sobald die Greifeinrichtungen 10, 11 das Werkstück 3 übernommen haben und die Heizeinrichtung 6 das Werkstück 3 abgegeben hat, fährt sie zurück in die Heizstation 4. Dort ist inzwischen auf die wieder abgesenkte, untere Heizeinrichtung 7 ein weiteres, noch kühles Werkstück 3' abgelegt worden. Die Werkstücke 3 bzw. 3' können entweder von Hand oder mit Hilfe einer Transporteinrichtung in die Heizstation 4 gelangen bzw. sie können auch in der Heizstation 4 auf einem perforierten Transportband 12 ruhen, welches zur automatischen Beschickung der Heizstation in Richtung des Pfeiles b (Fig. 1 und 3) vorgesehen ist. Als perforiertes Transportband 12 eignet sich z.B. ein Teflonband.

In der Formstation 5 befinden sich geeignete Formteile. Dies sind gemäß dem in den Fig. 1 - 6 dargestellten Ausführungsbeispiel eine Unterform 13 und eine Oberform 14. Die Greifeinrichtungen 10 und 11 halten das Werkstück 3 nach der Übernahme von der Heizeinrichtung 6 zwischen der Unterform 13 und der Oberform 14, und sobald die als Träger und Transporteur dienende Heizeinrichtung 6 die Formstation 5 wieder verlassen hat, fahren die Unterform 13 und die Oberform 14 zwecks Verformung des Werkstückes 3 und der Herstellung des gewünschten, dreidimensional verformten Formteiles 2 zusammen.

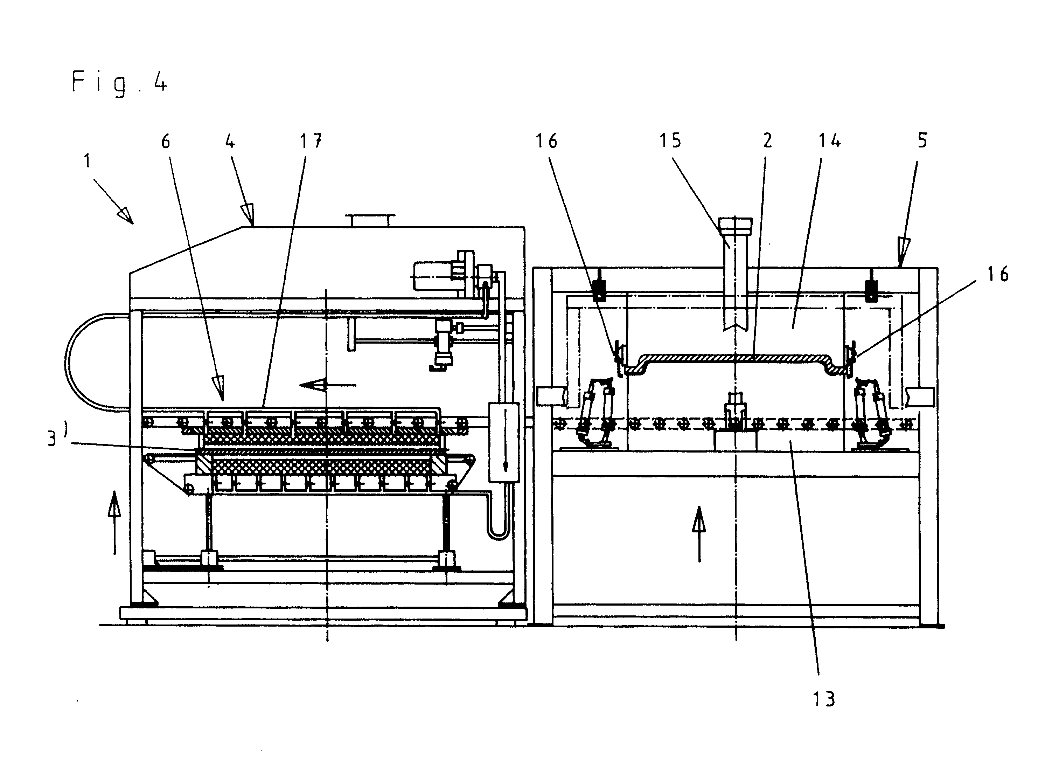

Figur 4 zeigt diesen Arbeitsschritt, wobei gemäß Ausführungsbeispiel die Unterform 13 nach oben gegen die dort stehende Oberform 14 bewegt wird. Als Hubeinrichtung 15 für die Unterform 13 ist z.B. eine Kolben-Zylindereinrichtung vorgesehen.

Ferner ist dafür gesorgt, daß die Greifeinrichtungen 10, 11 das Werkstück 3 rechtzeitig freigeben, wenn der Verformungsvorgang zwischen Unterform 13 und Oberform 14 beginnt.

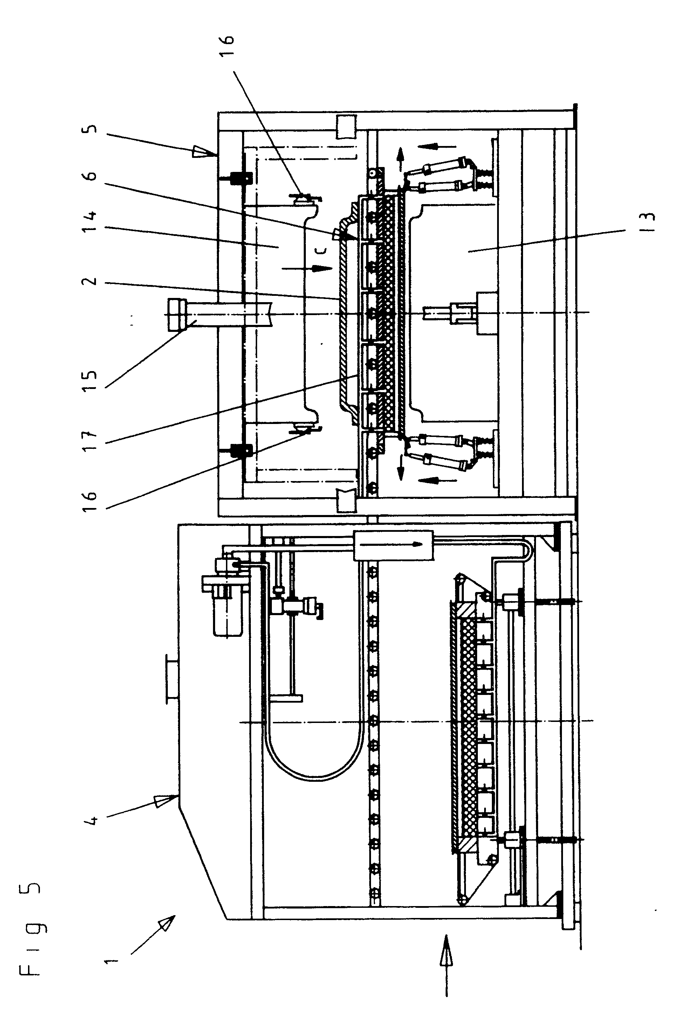

Sobald der Verformungsvorgang abgeschlossen ist, werden Unterform 13 und Oberform 14 wieder getrennt bzw. es bewegt sich gemäß Ausführungsbeispiel die Unterform 13 wieder in ihre untere Ausgangslage gemäß Fig. 5. Das Formteil 2 wird währenddessen noch unter der Oberform 14 hängend mit Hilfe von einer geeigneten Halteeinrichtung z.B. in Gestalt von verschwenkbaren Haltern 16 auf einem Niveau oberhalb der in die Formstation 5 verfahrbaren Heizeinrichtung 6 gehalten.

Sobald sich dann die Heizeinrichtung 6 mit dem nächsten, ausreichend aufgeheizten Werkstück 3' in die Formstation 5 bewegt hat (Fig. 5), wird das Formteil 2 von der Oberform 14 an die verfahrbare Heizeinrichtung 6 übergeben bzw. auf deren Oberseite 17 abgelegt (Fig. 5). Hierzu ist die Oberform 14 gesondert in vertikaler Richtung entsprechend dem Pfeil c in Fig. 5 bewegbar oder die Halter 16 geben das Formteil 2 lediglich frei, so daß es aufgrund der Schwerkraft aus geringer Höhe auf die Oberseite 17 der Heizeinrichtng 6 fällt. Dabei versteht es sich, daß die Oberseite 17 der Heizeinrichtung 6 eine ausreichend niedrige Temperatur besitzt, damit nicht eine erneute Erwärmung des Formteiles 2 erfolgt.

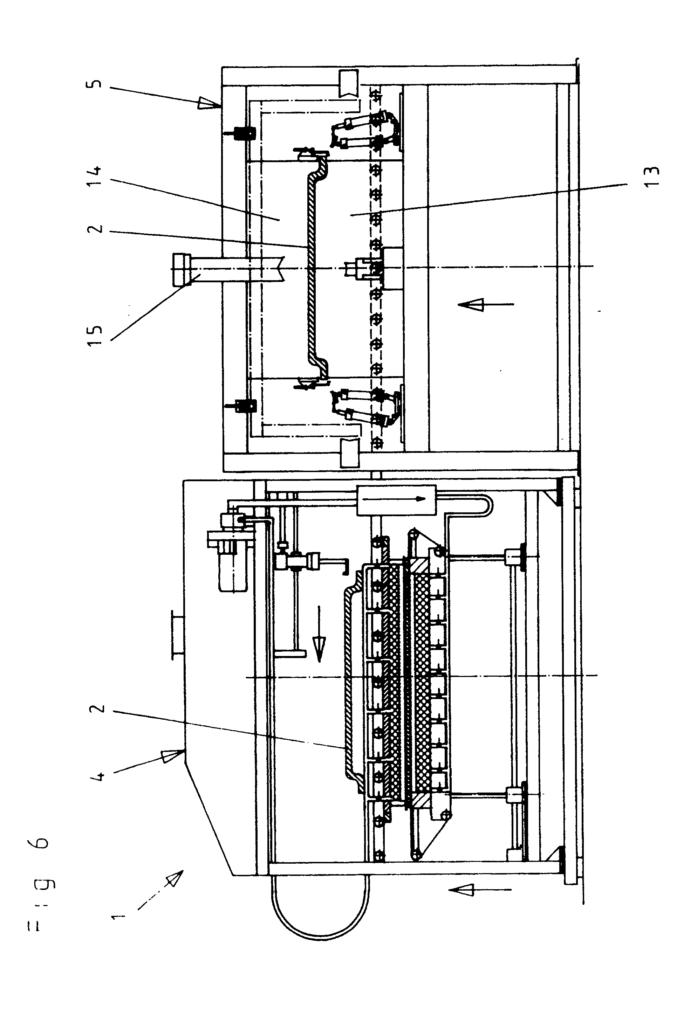

Die Heizeinrichtung 6 gibt ferner gemäß dem in Fig. 5 dargestellten Arbeitsschritt in der Formstation 5 das mitgebrachte Werkstück 3' an die Greifeinrichtungen 10, 11 ab und fährt dann mit dem auf ihr aufliegenden Formteil 2 in die Heizstation 4 zurück, wie dies in Fig. 6 dargestellt ist. Dort kann das Formteil 2 dann von Hand entnommen oder mit Hilfe von Handhabungsgeräten weitertransportiert werden, während in der Formstation 5 die Verformung des Werkstückes 3' zu einem Formteil 2 mit Hilfe der Unterform 13 und der Oberform 14 erfolgt.

Die beiden Heizeinrichtungen 6 und 7 können gleich oder verschieden sein. Die Erwärmung kann elektrisch induktiv, mit heißem Wasser, mit heißem Öl oder mit heißer Luft bzw. mit Kombinationen von diesen Medien erfolgen. Sofern das zu erwärmende Werkstück 3 mehrlagig ist und die einzelnen Werkstoffe unterschiedliche Temperatur- und/oder Materialeigenschaften besitzen wie z.B. bei aus Kunststoff bestehendem Trägermaterial und Deckmaterial aus Velour, Nadelfilz oder Schlingenware, die Lagen also aus homogenen oder mehr oder weniger inhomogenen Werkstoffen, einerseits Folien und andererseits Vlies oder Werkstoffen mit offener Oberfläche bestehen, so ist es zweckmäßig, daß die Arbeitstemperaturen der beiden Heizeinrichtungen gesondert regelbar sind, damit beide Heizeinrichtungen 6, 7 auch mit unterschiedlichen Temperaturen betrieben werden können.

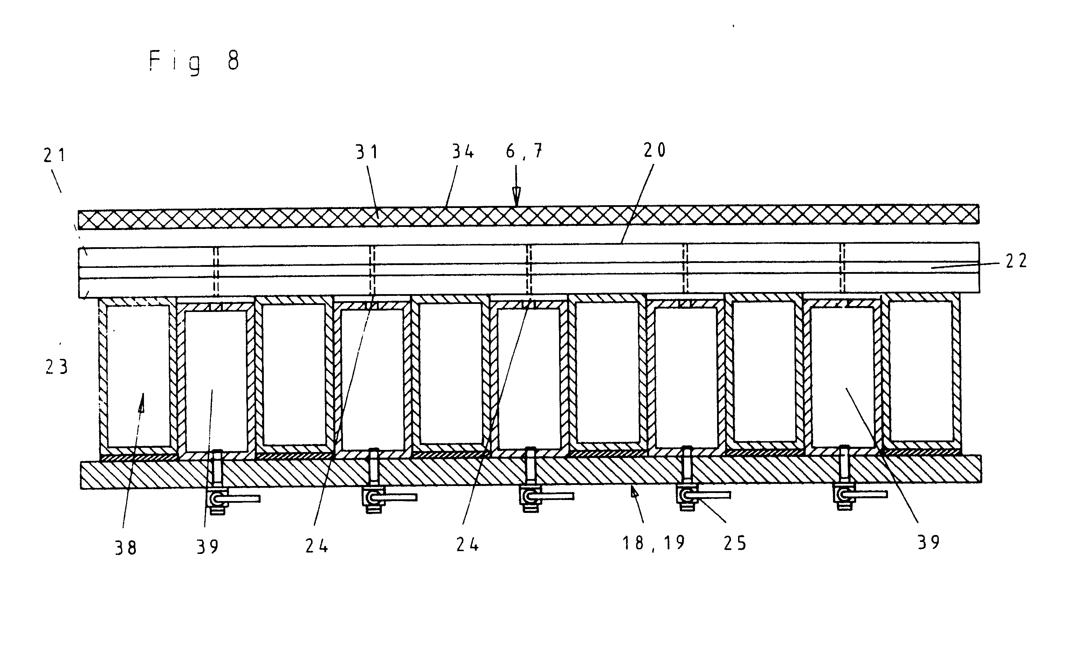

Die beiden Heizeinrichtungen 6 und 7 umfassen zweckmäßigerweise je eine Kontaktheizplatte 18 bzw. 19 als Grundelement. Diese Kontaktheizplatten 18, 19 sind beispielsweise elektrisch induktiv beheizbar und bestehen z.B. aus einer oberen, verhältnismäßig dünnwandigen, die eigentliche Kontaktfläche 20 bildenden, metallischen Platte 21, einer elektrisch heizbaren Heizfolie 22 und einer weiteren metallischen Platte 23, wie dies auch aus Fig. 8 hervorgeht. Sofern die Werkstoffeigenschaften des jeweils zu erwärmenden Werkstückes 3 dies zulassen, berühren die Heizeinrichtungen 6, 7 mit ihren Kontaktflächen 20 das Werkstück 3 unmittelbar.

Ferner befinden sich Strömungskanäle 24 für Luft in einer, zweckmäßigerweise jedoch in beiden Kontaktheizplatten 18, 19 und enden dort an deren jeweiligen Kontaktfläche 2o. Diese Strömungskanäle 24 sind darüber hinaus gesondert mit Hilfe von Sperrelementen 25 absperrbar. Die Strömungskanäle 24 in der unteren und/oder oberen Kontakheizplatte 18, 19 bzw. in der unteren und/oder oberen Heizeinrichtung 6, 7 sind mit Saugluft und/oder mit Druckluft, mit Raumtemperatur aufweisender und/oder mit temperierter,dann vorzugsweise erhitzter Luft beaufschlagbar, wozu sie mit einem wahlweise Überdruck und/oder Unterdruck erzeugenden Gebläse 26 verbunden sind.

Zur Erzeugung von Unterdruck an der oberen Heizeinrichtung 6, der erforderlich ist, damit die Heizeinrichtung 6 als Träger für ein unter ihr hängendes Werkstück 3 dienen kann, ist die obere Heizeinrichtung 6 gemäß Ausführungsbeispiel über eine Leitung 27 mit dem Gebläse 26 verbunden. Die Leitung 27 ist biegsam und kann der in die Formstation 5 verfahrbaren Heizeinrichtung 6 folgen. Die Leitung 27 kann aber auch als Druckleitung für Druckluft dienen, mit deren Hilfe das Lösen des Werkstückes 3 von der als Träger 6 dienenden Heizeinrichtung 6 erfolgt oder unterstützt wird.

Ferner ist das Gebläse 26 auch über eine Leitung 28 mit der unteren Heizeinrichtung 7 bzw. deren Strömungskanälen 24 für Luft verbindbar, um dort einen Überdruck oder einen Unterdruck zu erzeugen. Eine ein- und ausschaltbare Heizeinrichtung 29 kann in die Druckleitung 28 integriert sein.

Die Versorgung der über die gesamte, dem Werkstück 3 zugewandten Oberfläche verteilten Strömungskanäle 24 in der unteren Kontaktheizplatte 19 mit heißer Luft über das Gebläse 26 und die Heizeinrichtung 29 dient zum Erwärmen bzw. Erhitzen von luftdurchlässigen Werkstücken 3. Sie lassen sich mit Hilfe von Kontaktheizplatten nur im Bereich ihrer Oberflächen und nur bis in eine verhältnismäßig geringe Werkstücktiefe erwärmen. Beim Zusammenwirken einer oberen Heizeinrichtung 6 und einer unteren Heizeinrichtung 7 unter Verwendung von erhitzter Luft strömt diese von den Strömungskanälen 24 der unteren Heizeinrichtung 7 durch das luftdurchlässige Werkstück 3 in die obere Heizeinrichtung 6 bzw. die dort befindlichen Strömungskanäle 24 und sodann über die Unterdruckleitung 27 zum Gebläse 26. Das Gebläse 26, der Heißlufterzeuger 29, die untere Heizeinrichtung 7 und die obere Heizeinrichtung 6 sowie das zwischen beiden Heizeinrichtungen 6, 7 befindliche Werkstück 3 bilden einen in sich geschlossenen Kreislauf für die erhitzte Luft. Dieser in sich geschlossene Kreislauf wird so lange aufrecht erhalten, bis das luftdurchlässige Werkstück 3 auch in seinem Inneren die für eine Verformung in der Formstation 5 erforderliche Temperatur erreicht hat.

Um in der unteren Heizeinrichtung 7 eine optimale Verteilung der heißen Luft über die gesamte Oberfläche 30 des Werkstückes 3 zu erreichen, ist die untere Heizeinrichtung 7 vorzugsweise mit einem Heißluftverteiler 31 versehen. Dieser Heißluftverteiler 31 ist z.B. ein Gitterwerk oder eine Filtermatte, die bewirkt, daß die aus vergleichs- weise zahlenmäßig begrenzt vorgesehenen Strömungskanälen 24 im Bereich der Kontaktfläche 20 austretende Luft sich über die gesamte, zu erwärmende Oberfläche 30 des Werkstückes 3 verteilen kann.

Bei Verwendung eines Heißluftverteilers 31 kann dieser gemäß dem in den Figuren dargestellten Ausführungsbeispielen unmittelbar auf der Kontaktfläche 2o aufliegen.

Schließlich weist die untere Heizeinrichtung 7 einen am Rand 32 des zu erwärmenden Werkstükkes 3 anliegenden Rahmen 33 auf. Im wesentlichen umgibt dieser Rahmen 33 den Heißluftverteiler 31 und steht etwas über dessen werkstückseitige Oberfläche 34 vor. Dadurch entsteht zwischen der Unterseite des Werkstückes 3 und der Oberfläche 34 des Heißluftverteilers 31 eine flache Kammer 35, in der sich unter Überdruck stehende, heiße Luft befindet. Von hier strömt die heiße Luft entweder unmittelbar in das luftdurchlässige Werkstück 3 oder zunächst noch durch das stark perforierte Transportband 12 und schließlich in die obere Heizeinrichtung 6, welche die aus der Oberseite 30 des Werkstückes 3 austretende heiße Luft absaugt. Um eine gleichmäßige Aufnahme der aus der Oberseite 30 des Werkstückes 3 austretenden heißen Luft zu gewährleisten, ist auch die obere Heizeinrichtung 6 mit einem dem Heißluftverteiler 31 der unteren Heizeinrichtung 7 entsprechenden, identisch ausgebildeten Sammler 36 versehen. Ferner umgibt ein Rahmen 37 entsprechend dem Rahmen 33 den Sammler 36.

Sobald das luftdurchlässige Werkstück 3 in der Heizstation 4 auf die erforderliche Temperatur gebracht ist, wird der Heißluftkreislauf abgeschaltet und die obere Heizeinrichtung 6 wird vom Gebläse 26 her nur noch mit Unterdruck bzw. mit einem Dauervakuum beaufschlagt, so daß die Heizeinrichtung 6 auch als Träger für ein luftdurchlässiges Werkstück 3 dienen kann.

Eine sichere Temperaturregelung der beiden Heizeinrichtungen 6 und 7 ist nur dann gewährleistet, wenn dort zusätzlich eine Kühleinrichtung 38 vorgesehen ist. Sie ist der Übersichtlichkeit wegen in den Figuren 1 - 6 nicht dargestellt. Diese Kühleinrichtung 38 umfaßt in der unteren und/oder oberen Heizeinrichtung 6, 7 bzw. in deren Kontaktheizplatten 18, 19 angeordnete Kanäle 39 für ein Kühlmittel. Bei diesem Kühlmittel kann es sich um Wasser, Öl oder dgl. handeln.

Die Kanäle 39 für das Kühlmittel in der bzw. den Kontaktheizplatten 18, 19 sind zweckmäßigerweise ansteuerbar bzw. einzeln ansteuerbar. Dadurch ist es möglich, die Temperatur in einzelnen Bereichen der Kontaktheizplatte 18 bzw. 19 auf unterschiedliche Höhe einzuregeln.

Auch der bzw. die Rahmen 33, 37 können dazu dienen, daß der Rand bzw. die Ränder 40 des Werkstückes 3 vor Erwärmung geschützt werden. Das Werkstück 3 ist somit nicht nur zwischen den beiden Heizeinrichtungen 6, 7 mit Hilfe der jeweiligen Rahmen 33, 37 jeweils im Abstand von dem Heißluftverteiler 31 bzw. Sammler 36 fixierbar, sondern die Rahmen 33, 37 besitzen auch noch eine weitere Funktion dahingehend, daß der Rand 40 des Werkstückes 3 sich weniger erwärmt und dadurch auch eine größere Festigkeit behält als die übrigen Teile des Werkstückes 3. Diese höhere Festigkeit ist in vielen Fällen wünschenswert, wenn nämlich das Werkstück 3 in der Formstation 5 von den dort befindlichen Greifeinrichtungen 10, 11 übernommen wird.

Wenn das Werkstück 3 erwärmt oder erhitzt wird, so schrumpft es. Um diesen Schrumpfeffekt auszugleichen, bewegen sich die Kontaktheizplatten 18, 19 nochmals aufeinander zu und sind zu diesem Zweck vorzugsweise auf in den Figuren nicht dargestellten Federn gelagert. Die Kontaktheizplatten 18, 19 können langsam aufeinander zu federn. Die Federn sind ferner vorzugsweise verhältnismäßig weich.

Sämtliche oben erwähnten Maschinenteile sind in einem geeigneten Maschinenrahmen 41 bzw. 42 zusammen mit ihren Lagern und Antrieben untergebracht. Diese Maschinenelemente sind grundsätzlich bekannt und der Übersichtlichkeit wegen in den Figuren nicht dargestellt.

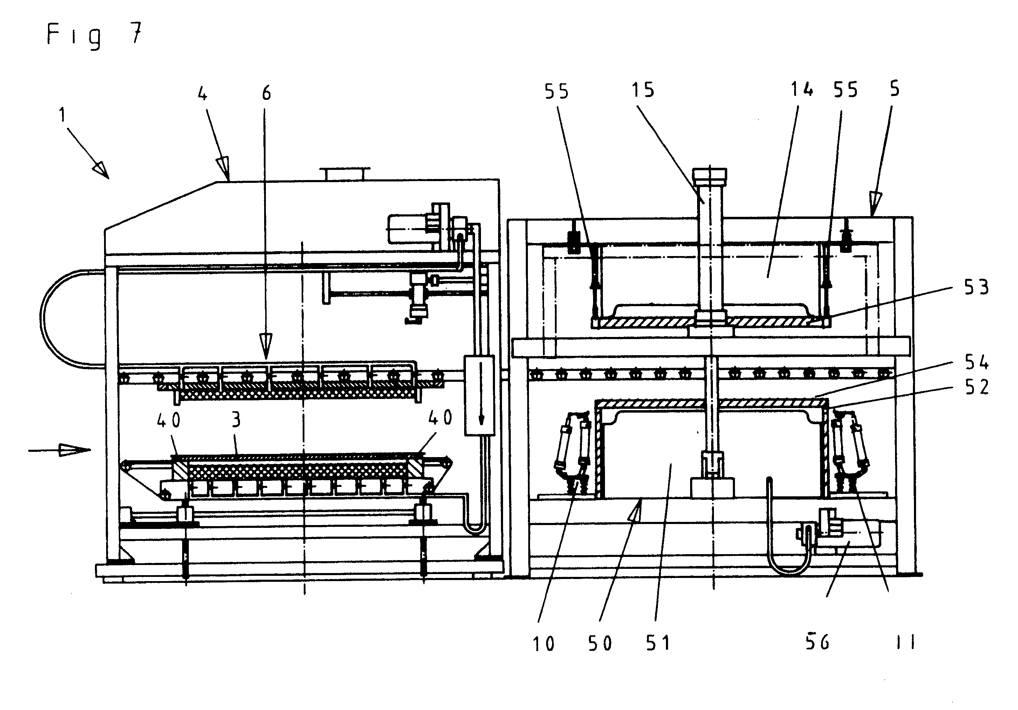

Die Ausführungsform gemäß Fig. 7 unterscheidet sich von dem zuerst beschriebenen Ausführungsbeispiel nur dadurch, daß in der Formstation 5 an Stelle einer Unterform 13 und einer Oberform eine zur reinen Vakuumverformung geeignete Einrichtung 50 angeordnet ist. Diese Einrichtung 50 besteht aus einer Matrize oder Patrize 51, einem Vakuumkasten 52 und einem Rahmen 53, der auf den freien Rand 54 des Vakuumkastens 52 absenkbar ist und dort zum Fixieren des erhitzten Werkstückes 3 dient. Die Vakkumverformung erfolgt in der Einrichtung 50 in grundsätzlich bekannter Weise.

Ebenso wie das Werkstück 3 von der Heizeinrichtung 6 bei dem in Verbindung mit den Fig. 1 - 6 beschriebenen Ausführungsbeispiel in die Formstation 5 transportiert und dort von den Greifeinrichtungen 1o, 11 übernommen wird, legen diese das Werkstück 3 auf den freien Rand 54 des Vakuumkastens 52, woraufhin eine geeignete Verstelleinrichtung 55 den Rahmen 53 aus einer über dem Niveau der verfahrbaren Heizeinrichtung 6 befindlichen Ruhestellung gemäß Fig. 7 absinkt und das Werkstück 3 mit seinem Rand 40 auf den freien Rand 53 des Vakuumkastens 52 drückt. Daraufhin wird die Matrize bzw. Patrize 51 in an sich bekannter Weise mit Hilfe eines Gebläses 56 mit Vakuum beaufschlagt, so daß der atmosphärische Luftdruck das Werkstück 3 auf die Oberfläche der Matrize bzw. Patrize 51 drückt und somit die gewünschte Verformung bewirkt.

Auch mit Überdruck arbeitende Preßeinrichtungen oder dgl. sind grundsätzlich einsetzbar.

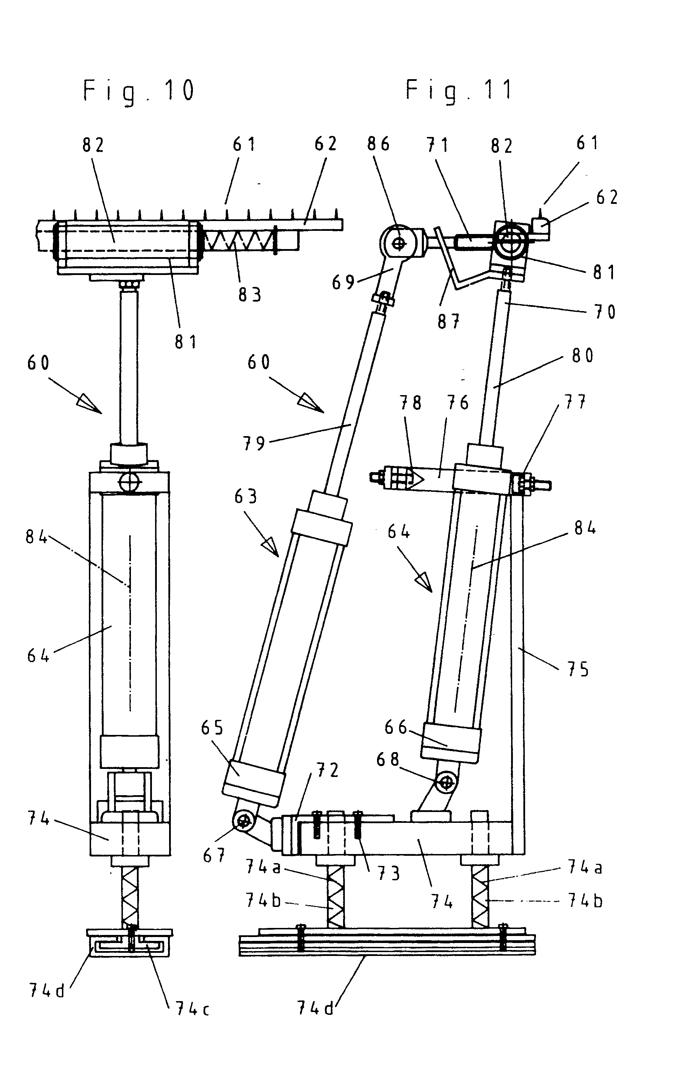

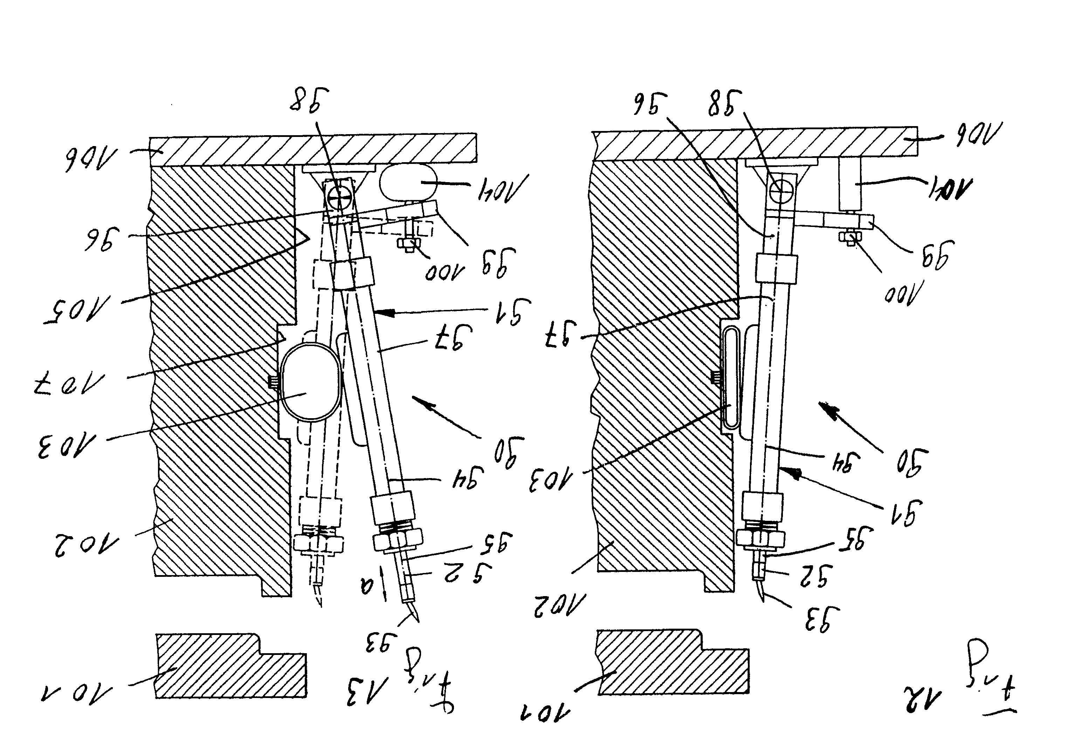

Bei den beiden Greifeinrichtungen 10, 11 handelt es sich vorzugsweise um Nadelgreifer 60 gemäß den Fig. 10 und 11 oder um Nadelgreifer 9o gemäß den Fig. 12 und 13. Jeder der Nadelgreifer 60 weist mindestens eine Nadel 61, vorzugsweise jedoch mehrere Nadeln 61 auf, wie aus Fig. 10 hervorgeht. Die Nadeln 61 sind an einem Nadelträger 62 angeordnet. Ferner sind die Nadeln 61 gerade und relativ kurz.

Der Nadelgreifer 60 umfaßt ferner mindestens ein, gemäß Ausführungsbeispiel jedoch zwei Verstellelemente 63 und 64. Die beiden Verstellelemente 63, 64 sind jeweils an ihrem einen Ende 65 bzw. 66 an einem Fixpunkt 67 bzw. 68 verschwenkbar angelenkt. Ferner sind die beiden Verstellelemente 63, 64 teleskopierbar bzw. ihre Länge ist veränderbar. Schließlich sind die beiden Verstellelemente 63, 64 auch an ihren anderen Enden 69, 7o über ein Distanzstück 71 miteinander verbunden, wobei dieses Distanzstück 71 an den jeweiligen Enden 69,7o schwenkbar angelenkt ist. Die Länge des Distanzstückes 71 istgrundsätzlich starr, zwecks Einstellung jedoch auch veränderbar. Der Abstand der beiden Anlenkstellen bzw. Fixpunkte 67, 68 ist, wie auch Fig. 11 zeigt, etwas größer als die Länge des Distanzstückes 71. Auch der Abstand der beiden Fixpunkte 67 und 68 voneinander ist zwecks Einstellung veränderbar und in der jeweiligen Betriebsstellung mit Hilfe eines Einstellschuhes 72 und mit Hilfe von Schrauben 73 auf einem Träger 74 fixierbar.

Der Träger 74 ruht von Federn 74a abgestützt längsverschiebbar auf Führungsstangen 74b, die bodenseitig auf einem Schuh 74c angeordnet sind, der in eine Schwalbenschwanzführung 74d greift. Dort ist der Schuh 74c mit Hilfe von Schrauben befestigbar. Der Träger 74 ist daher zuammen mit den beiden Verstellelementen 63 und 64 längs der Schwalbenschwanzführung 74d ebenfalls verstellbar.

An dem Träger 74 ist schließlich noch eine Stütze 75 mit einem einstellbaren Anschlag 76 angeordnet, der die mögliche Schwenkbewegung des einen Verstellelementes 64 um den Fixpunkt 68 zwischen zwei Anschlagpunkten 77 und 78 begrenzt.

Die beiden Verstellelemente 63 und 64 stehen in der Ruhestellung gemäß Fig. 11 annähernd parallel, jedoch leicht spitzwinklig zueinander und bilden zusammen mit dem angelenkten Distanzstück 71 und den Fix- bzw. Schwenkpunkten 67, 68 ein Trapez, das zwischen den Anschlagpunkten 77, 78 des Anschlages 76 bewegbar ist. Die Anschlagpunkte 77, 78 werden zweckmäßigerweise mit Hilfe von einstellbaren Schrauben gebildet.

Die beiden Verstellelemente 63, 64 sind vorzugsweise Kolben-Zylindereinrichtungen, wobei die Zylinder mit ihren den Kolbenstangen 79, 80 abgewandten Enden an den Fix- bzw. Schwenkpunkten 67, 68 angelenkt sind.

Das eine Verstellelement 64 bzw. die entsprechende Kolben-Zylindereinrichtung trägt am freien, teleskopierbaren Ende 70 ein Lagerstück 81, welches den Nadelträger 62 frei schwenkbar trägt. Mit seiner Achse 82 ist der Nadelträger 62 im Lagerstück 81 in Achsrichtung verschiebbar. Ferner beaufschlagt eine sich am Lagerstück 81 abstützende Feder 83 den Nadelträger 62, so daß dieser von der Feder 83 in eine Grundstellung verschoben wird, aus dieser Grundstellung gegen die Kraft der Feder 83 aber relativ zur senkrecht zur Achse 82 stehenden Achse 84 des Verstellelementes 64 bzw. der entsprechenden Kolben-Zylindereinrichtung verschiebbar ist. Der Nadelgreifer kann mit seinem Nadelträger 62 daher bei Zugbeanspruchung am Werkstück 3 auftretenden Verformungen oder Lageänderungen auch in seitlicher Richtung folgen.

Der Nadelträger 62 ist schließlich über Arme bzw. eine von diesen gebildete Gabel auch mit dem Distanzstück 71 verbunden, welches am freien Ende 69 des anderen Verstellelementes 63 bzw. an der Kolbenstange 79 der entsprechenden Kolben-Zylindereinrichtung in einem Gelenk 86 angelenkt ist. Die Lage des freien Endes 69 des Verstellelementes 63 bzw. die jeweilige Lage des Gelenkes 86 bestimmt daher auch die Stellung und Neigung des Nadelträgers 62 und seiner Nadeln 61. Eine durch das Verstellelement 63 bewirkte Lageänderung des Gelenkes 86 bewirkt eine entsprechende Lageänderung bzw. Neigung des Nadelträgers 62 und der Nadeln 61.

Begrenzt wird die mögliche Verstellung und Lageänderung des Gelenkes 86 durch eine Gabel 87 am freien Ende 70 des Verstellelementes 64. Die Gabel 87 dient als Anschlag für das Distanzstück 71, welches gemäß Fig. 11 in einem Schlitz der Gabel 87 liegt.

Die Zylinder der beiden Verstellelemente 63 und 64 sind getrennt ansteuerbar, so daß auch die beiden Kolbenstangen 79, 80 einzeln oder gemeinsam verstellbar sind. Ausserdem ist der Hub der beiden Kolbenstangen 79, 80 verschieden und schließlich ist die Ansteuerung der Verstellelemente 63, 64 auch derart, daß sich die Kolbenstangen 79, 80 unterschiedlich schnell bewegen können. Hierzu sind in den Druckversorgungsleitungen für die Verstellelemente 63, 64 erforderliche Drossel- und Steuerelemente vorgesehen, die grundsätzlich bekannt sind.

Zum Übernehmen eines Werkstückes 3 von der verfahrbaren Heizeinrichtung 6 werden die Nadeln 61 am Nadelträger 62 von unten nach oben in das Werkstück 3 gedrückt, woraufhin die Kolbenstange 79 des Verstellelementes 63 geringfügig eingefahren wird, so daß der Nadelträger 62 um die Achse 82 entgegen dem Uhrzeigersinn schwenkt und ferner der Nadelträger 62 zusammen mit dem ihn tragenden Verstellelement 64 in Fig. 11 nach links bewegt wird. Das Einnadeln erfolgt somit durch Ausfahren der Kolbenstangen 79, 80 und anschließendes Einziehen der Kolbenstange 79.

Sobald das Werkstück 3 eingenadelt ist, werden beide Kolbenstangen 79, 80 eingefahren, bis das Verstellelement 64 am Anschlagpunkt 78 des Anschlages 76 an einer Weiterbewegung gehindert wird. Der notwendige Hub der Kolbenstange 79 ist insgesamt bei jedem Arbeitsgang größer als der der Kolbenstange 80.

Zum Abgeben des Werkstückes wird wiederum der Nadelträger 62 mit Hilfe des Verstellelementes 63 verschwenkt und ferner werden beide Kolbenstangen 79, 80 soweit eingefahren bzw. wieder ausgefahren, daß das jeweils gewünschte Niveau erreicht wird.

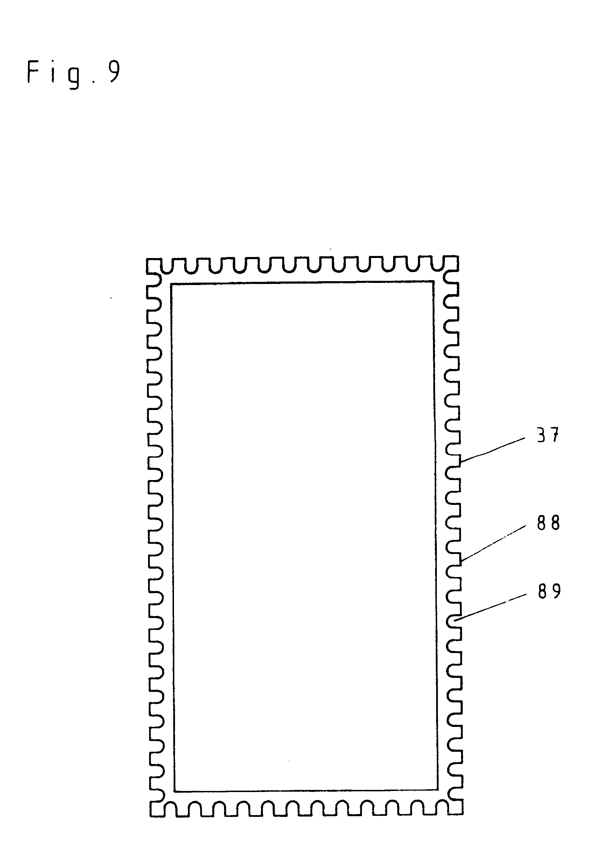

Der Rahmen 37 an der verfahrbaren Heizeinrichtung 6 ist zweckmäßigerweise an das Einnadeln des Werkstückes 3 durch den Nadelträger 62 angepaßt. Er weist hierzu gemäß Fig. 9 aussen an seinem Umfang Ausnehmungen 89 auf. Diese Ausnehmungen 89 verleihen dem Rahmen 37 eine rechenartige Kontur und ermöglichen es den Nadeln 61, in den Werkstoff des Werkstückes 3 in geringem Abstand von dessen Aussenkante einzudringen. Hierzu greifen die Nadeln zunächst durch das Werkstück und liegen dann mit ihren Spitzen im Bereich der Ausnehmungen 89.

Greifeinrichtungen 10 und 11 bzw. Nadelgreifer 60 sind in der Formstation 5 an allen Seiten des Werkstückes 3 angeordnet, wobei die Nadelträger 62 in insgesamt drei, sich zugleich überschneidenden Richtungen X, Y und Z bewegbar sind.

Der Nadelgreifer 9o gemäß den Fig. 12 und 13 weist nur ein teleskopierbares bzw. in seiner Länge veränderbares Verstellelement 91 und nicht zwei Verstellelemente wie der Nadelgreifer 6o auf. Das Verstellelement 91 ist vorzugsweise wiederum eine Kolben-Zylindereinrichtung. An seinem einen, axial in Richtung des Doppelpfeiles a (Fig. 13) verstellbaren Ende 92 trägt das Verstellelement 91 eine oder mehrere Nadeln 93, die gegenüber der Achse 94 der die Bewegung bewirkenden Kolbenstange 95 in Spannrichtung abgewinkelt ist. Ein eingenadeltes Werkstück kann sich daher nicht selbsttätig lösen.

Das Verstellelement 91 ist an seinem zweiten Ende 96, d.h. am unteren Ende der Zylindereinrichtung 97 um eine Achse 98 verschwenkbar gelagert. Nahe bei dem unteren Ende 96 ragt ferner ein Arm 99 von der Zylindereinrichtung 97 weg und weist ein Einstellelement 1oo auf.

Das Verstellelement 91 kann um seine Lagerstelle bzw. um die bodenseitig angeordnete Achse 98 Schwenkbewegungen auf Formwerkzeuge 1o1 und 1o2 zu und von diesen weg ausführen. Als Antrieb hierfür dient ein aufblasbarer und entleerbarer Schlauch 1o3 sowie ein Rückstellelement 1o4 z.B. in Gestalt einer Druckmembran 1o4, die an dem Arm 99 angreift.

Der als Schwenkantrieb für das Verstellelement 91 dienende Schlauch 1o3 liegt einerseits am Verstellelement 91 an und stützt sich andererseits am unteren Formwerkzeug 1o2 ab und ist vorzugsweise auch dort befestigt. Der Schlauch 1o3 ist ein Schlauchstück und kann beliebige Länge besitzen, so daß er nicht nur an einem einzigen Verstellelement 91 anliegt, sondern an mehreren und gegebenenfalls sogar an mehreren Seiten des Formwerkzeuges 1o2.

Das Verstellelement 91 ist im wesentlichen stehend nahe am Umfang 1o5 des unteren Formwerkzeuges 1o2 angeordnet und nur innerhalb eines geringen Winkelbereiches verschwenkbar, wie aus Fig. 13 entsprechend den beiden Darstellungen in ausgezogenen bzw. in gestrichelten Linien hervorgeht. Der Hub in Schwenkrichtung wird begrenzt durch die Druckmembran 1o4, bei der es sich z.B. auch um einen Gummipuffer o. dgl. handeln kann, sowie durch das Einstellelement 1oo am Arm 99, welches mit der Druckmembran 1o4 bei der Einstellung des Schwenkhubes zusammenwirkt.

Die Nadel 93 steht mit ihrer Spitze in der Einnadelposition gemäß Fig. 12 von den Formwerkzeugen 1o1 und 1o2 leicht weggeneigt. Die Lagerung des unteren Endes 96 des Verstellelementes 91 und die Anordnung der Druckmembran 1o4 erfolgen beispielsweise an einer Grundplatte 1o6 des unteren Formwerkzeuges 1o2.

Der Schlauch 1o3 kann in einer Ausnehmung 1o7 am Umfang 1o5 des unteren Formwerkzeuges 1o2 teilweise versenkt angeordnet sein. Die Ansteuerung und Versorgung des Schlauches 1o3 mit einem Druckmedium sind in den Figuren nicht dargestellt, da es sich hier um grundsätzlich geläufige Elemente handelt.

Die Erfindung ist nicht auf die in den Figuren dargestellten Ausführungsbeispiele beschränkt, da noch mannigfache Abwandlungen vorgenommen werden können, ohne von dem grundsätzlichen Erfindungsgedanken abzuweichen.

**Patentansprüche**

1. Vorrichtung mit einer Heizstation und einer Formstation zum Herstellen eines Formteiles aus einem flächigen, dreidimensional verformbaren, einlagigen oder mehrlagigen Werkstück, das thermoplastischen Kunststoff enthält, dadurch gekennzeichnet,
   a) daß in der Heizstation ( 4 ) mindestens eine Heizeinrichtung ( 6 ) angeordnet ist und
   b) daß mindestens eine Heizeinrichtung (6) zugleich als Träger und Transporteinrichtung für das Werkstück (3) in die Formstation (5) bewegbar ist.

2. Vorrichtung nach Anspruch 1, dadurch gekennzeichnet, daß zwei Heizeinrichtungen (6, 7) vorgesehen und auf unterschiedliche Arbeitstemperaturen einstellbar sind.

3. Vorrichtung nach einem oder mehreren der vorhergehenden Ansprüche, dadurch gekennzeichnet, daß die obere Heizeinrichtung (6 ) als Träger zum Transport des zu verformenden Werkstückes ( 3 ) aus der Heizstation ( 4 ) in die Formstation ( 5 ) verfahrbar ist.

4. Vorrichtung nach einem oder mehreren der vorhergehenden Ansprüche, dadurch gekennzeichnet, daß mindestens eine der beiden Heizeinrichtungen (6,7) eine elektrisch beheizbare Kontaktheizplatte (18,19) umfaßt und daß in der Kontaktheizplatte (18,19) an deren Kontaktfläche ( 20 ) endende Strömungskanäle (24 ) für Luft angeordnet sind.

5. Vorrichtung nach einem oder mehreren der vorhergehenden Ansprüche, dadurch gekennzeichnet, daß die Strömungskanäle (24) in der unteren und/oder oberen Kontaktheiz- platte (18,19) mit erhitzter Luft beaufschlagbar sind.

6. Vorrichtung nach einem oder mehreren der vorhergehenden Ansprüche, dadurch gekennzeichnet, daß die Strömungskanäle (24) in der unteren und/oder oberen Kontaktheizplatte (18, 19) an einen Überdruck-/Unterdruckerzeuger (26 ) angeschlossen sind.

7. Vorrichtung nach einem oder mehreren der vorhergehenden Ansprüche, dadurch gekennzeichnet, daß die untere Heizeinrichtung(7) einen am Rand (32) des zu erwärmenden Werkstückes (3) anliegenden und den Rand ( 40) vor Erwärmung schützenden Rahmen ( 33 ) aufweist und/oder daß die obere Heizeinrichtung (6) einen derartigen Rahmen ( 37 ) aufweist.

8. Vorrichtung nach einem oder mehreren der vorhergehenen Ansprüche, dadurch gekennzeichnet, daß das zu erwärmende Werkstück (3, 3') in der Heizstation (4 ) auf einem perforierten Transportband ( 12 ) ruht.

9. Vorrichtung nach einem oder mehreren der vorhergehenden Ansprüche, dadurch gekennzeichnet, daß ein Heißluftverteiler (31) und/oder ein Sammler (36) auf der Kontaktfläche (20) der Kontaktheizplatte (18, 19) der Heizeinrichtung (6, 7) angeordnet ist.

10. Vorrichtung nach einem oder mehreren der vorhergehenden Ansprüche, dadurch gekennzeichnet, daß der Heißluftverteiler (31) und/oder der Sammler (36) eine Filtermatte ist.

11. Vorrichtung nach einem oder mehreren der vorhergehenden Ansprüche, dadurch gekennzeichnet, daß die Heizeinrichtung ( 7 ) aus einer die Kontaktfläche (20 ) aufweisenden, dünnwandigen metallischen Platte ( 21 ), einer elektrisch heizbaren Heizfolie (22 ), einer weiteren metallischen Platte ( 23 ), wobei die Heizfolie (22) zwischen den beiden Platten (21, 23) angeordnet ist, Strömungskanäle (24) für erhitzte Luft und/oder Luft mit Unterdruck / Überdruck und gegebenenfalls einer Kühleinrichtung (38) besteht.

12. Vorrichtung nach einem oder mehreren der vorhergehenden Ansprüche, dadurch gekennzeichnet, daß die Kontaktheitsplatten (18, 19) nach dem Schließen der Heizeinrichtungen (6, 7) beim Schrumpfen des zwischen ihnen befindlichen Werksückes (3o) nochmals aufeinander zu bewegen.

13. Vorrichtung nach einem oder mehreren der vorhergehenden Ansprüche, dadurch gekennzeichnet, daß die Kontaktheizplatten(18, 19) auf Federn gelagert sind.

14. Einrichtung zum Übernehmen und Halten eines flächigen Werkstückes, insbesondere in Verbindung mit einer Vorrichtung nach einem oder mehreren der vorhergehenden Ansprüche, dadurch gekennzeichnet, daß sie mindestens eine bewegbare Greifeinrichtung (1o,11) in Gestalt je eines Nadelgreifers (6o, 9o) mit mindestens je einer Nadel (61, 93) umfaßt.

15. Einrichtung nach Anspruch 14, dadurch gekennzeichnet, daß jeder Nadelgreifer (60) mindestens einen Nadelträger (62) mit einer mehreren Nadeln (61, 93) sowie mindestens ein Verstellelement (63, 64,91) umfaßt.

16. Einrichtung nach Anspruch 14 und/oder 15 ,dadurch gekennzeichnet, daß als Verstellelemente (63, 64) zwei Kolben-Zylindereinrichtungen vorgesehen sind.

17. Einrichtung nach einem oder mehreren der Ansprüche 14 - 16, dadurch gekennzeichnet, daß die Nadelträger (62) längs der Kanten des Werkstückes (3) bewegbar sind.

18. Einrichtung nach einem oder mehreren der Ansprüche 14 - 17, dadurch gekennzeichnet, daß die Nadelträger (62) verschwenkbar am freien Ende (70) des einen Verstellelementes (64) angeordnet sind.

19. Einrichtung nach einem oder mehreren der vorhergehenden Ansprüche 14 - 18, dadurch gekennzeichnet, daß der das Werkstück (3) randseitig tragende Rahmen (37) aussen an seinem Umfang (88) rechenartige Ausnehmungen (89) aufweist.

20. Vorrichtung nach einem oder mehreren der vorhergehenden Ansprüche 14 - 19, dadurch gekennzeichnet, daß mindestens ein Schlauch (1o3)/Schlauchstück als Antrieb für das Verstellelement (91) vorgesehen ist.

21. Vorrichtung nach einem oder mehreren der vorhergehenden Ansprüche 14 - 2o, dadurch gekennzeichnet, daß der Schlauch / Schlauchstück (1o3) einerseits am Verstellelement (91) anliegt und sich andererseits an einem Formwerkzeug (1o2) abstützt.

Fig. 1

EP 0 450 482 A2

Fig.2

EP 0 450 482 A2

Fig. 3

EP 0 450 482 A2

Fig. 4

EP 0 450 482 A2

Fig 5

EP 0 450 482 A2

Fig 6

Fig 7

Fig 8

Fig. 9

37

88

89

Fig. 10

Fig. 11

Fig 12

Fig 13

EP 0 450 482 A2